# EUROPEAN PATENT SPECIFICATION

(11) **EP 4 451 790 B1**
(45) Date of publication and mention of the grant of the patent: **04.11.2026**
(21) Application number: 23739934.0
(22) Date of filing: 07.01.2023
(51) Int. Cl.: H04W 76/27, H04W 36/00, H04W 48/20, H04W 24/08, H04W 76/40

(54) **METHOD AND APPARATUS USED IN WIRELESS COMMUNICATION**
VERFAHREN UND VORRICHTUNG ZUR VERWENDUNG IN DER DRAHTLOSEN KOMMUNIKATION
PROCÉDÉ ET APPAREIL UTILISÉS DANS UNE COMMUNICATION SANS FIL

(30) Priority: 13.01.2022 CN 202210037858
(43) Date of publication of application: 23.10.2024
(73) Proprietor: Apogee 5G Global, LLC, Plano, TX 75024 (US)
(72) Inventor: ZHANG, Jinfang, Shanghai 201206 (CN); ZHANG, Xiaobo, Shanghai 201206 (CN)
(74) Representative: Gunzelmann, Rainer
(86) International application number: PCT/CN2023/071130
(87) International publication number: WO 2023/134591

(56) References cited:
- WO-A1-2020/175906
- WO-A1-2021/138662
- WO-A1-2021/219280
- CN-A- 106 658 758
- CN-A- 108 307 382
- CN-A- 109 936 878
- US-B2- 10 863 393

## Description

### BACKGROUND

### TECHNICAL FIELD

The present application relates to a method and a device used in wireless communication systems, and in particular to a method and device supporting mobility while in RRC_Inactive state in wireless communications.

### RELATED ART

The RRC_Inactive (RRC_INACTIVE) state is a newly introduced radio resource control (RRC) state in New Radio (NR). When a UE (i.e., User Equipment) enters the RRC_Inactive state, the UE can retain part of the network configuration information. When there arrives some traffics, the UE can perform data transmission after re-entering RRC_CONNECTED state. Not until Rel-16 will data transmission in an RRC inactive state be supported in the 3rd Generation Partner Project (3GPP) Radio Access Network (RAN).

As the application scenarios of the future wireless communication system become more and more diverse, small data service will play a significant role in future wireless communications with the rapid development of the Internet of Things (IoT). When it comes to small data transmission, the signaling overhead of RRC state transition is larger than the transmission overhead of small data, and meanwhile the overhead of the UE power consumption is also increased. Therefore, it was decided at the 3GPP RAN #88e plenary that a Work Item (WI) is to be conducted to standardize small data transmission in the RRC inactive state.

The feature of multicast/broadcast transmission is not supported in the earliest version(s) of the fifth Generation (5G), that is, the Rel 15 and Rel 16, but in many significant application scenarios, such as public safety and mission critical, the application of Vehicle-to-Everything (V2X), software delivery and group communications, the one-to-many transmission feature of multicast/broadcast communications can enhance the system performance and user experience in a striking way. To support multicast/broadcast communications, 5G broadcast evolution was discussed between the 3GPP RAN #78 plenary and RAN #80 plenary, and a Study Item (SI) of the architecture evolution of 5G broadcast services was adopted by the Service and System Aspects (SA) #85 session. To support reliable multicast/broadcast service (MBS) transmission, the 3GPP has conducted studies in Rel-17 on MBS transmissions in RRC_CONNECTED state. In order to further reduce UE power consumption, the 3GPP started to discuss supporting MBS in RRC_Inactive state in Rel-18.

US 10 863 393 B2 discloses a state switching method determining whether a user equipment (UE) is in an inactive state, wherein the inactive state is an intermediate state between a connect state and an idle state, determining whether the UE meets a predetermined condition, and switching the UE from the inactive state to the idle state when it is determined that the UE is in the inactive state and meets the predetermined condition.

### SUMMARY

The invention is defined by the independent claims.

According to the present disclosure, user equipment (UE), a system, and methods according to the independent claims are provided. Developments are set forth in the dependent claims. The inventors have found through researches that when the UE monitors the Cell Handover condition is satisfied while in RRC_Connected state, the UE can switch to a neighboring cell; and when the UE measures that the wireless link quality of a serving cell deteriorates while the wireless link quality of the neighboring cell is better while in RRC_Inactive state, how the UE can support the mobility, and in particular how to ensure the traffic continuity when the UE is receiving MBS needs to be investigated.

The present application discloses a solution where the UE supports different mobility treatments in RRC_Inactive state depending on the measured radio link quality and whether the UE is in a state of transmitting traffics. Though originally targeted at a Uu air interface, the present application is also applicable to a PC5 air interface. Additionally, the adoption of a unified solution for various scenarios, including but not limited to uplink communications, contributes to the reduction of hardcore complexity and costs. In the case of no conflict, the embodiments of a first node and the characteristics in the embodiments may be applied to any other node, and vice versa. What's more, the embodiments in the present application and the characteristics in the embodiments can be arbitrarily combined if there is no conflict. Particularly, for interpretations of the terminology, nouns, functions and variables (unless otherwise specified) in the present application, refer to definitions given in TS36 series, TS38 series and TS37 series of 3GPP specifications.

The present application provides a method in a first node for wireless communications, comprising:
receiving a first message, the first message being used to indicate entering RRC_Inactive state;
determining whether any condition in a first condition set is satisfied in RRC_Inactive state; and
performing a first action as a response to that any condition in the first condition set is satisfied;
herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node.

In one embodiment, the above method of determining the first action based on the first message may improve flexibility.

In one embodiment, the above method of determining the first action based on the first message may design the first condition set in different ways to optimize network support for different scenarios.

In one embodiment, the above method of entering an RRC idle (RRC_IDLE) state from an RRC inactive state can reduce UE power consumption.

According to one aspect of the present application, comprising:
the at least one radio bearer being in active state.

According to one aspect of the present application, comprising:
a channel quality of a second cell being used to determine whether the first condition is satisfied;
herein, the second cell is a neighboring cell of the first cell.

According to one aspect of the present application, comprising:
the second message being used to indicate that RRC reconfiguration is completed;
herein, the second message is transmitted in the second cell, the second cell belonging to a target candidate cell set; data from MBS is transmitted via multicast in any target candidate cell in the target candidate cell set; and the first node maintains RRC_Inactive state after the second message is transmitted.

In one embodiment, the above method of transmitting the second message in the second cell allows for fast switching to the second cell, reducing traffic interruption time.

According to one aspect of the present application, comprising:
the second message being used to request resumption of an RRC connection;
herein, the second message is transmitted in the first cell.

According to one aspect of the present application, comprising:
receiving a third message as a response to transmitting the second message, the third message being used to indicate entering RRC_Connected state.

In one embodiment, the above method can simplify the protocol complexity by entering RRC_Connected state after transmitting the second message, and then Cell Handover can be performed in RRC_Connected state.

According to one aspect of the present application, comprising:
receiving a fourth message as a response to transmitting the second message, the fourth message being used to maintain RRC_Inactive state;
herein, the second message is used to request Cell Handover; the fourth message is used to indicate Cell Handover.

In one embodiment, the above method can perform Cell Handover quickly and reduce traffic interruption time by maintaining RRC_Inactive state after transmitting the second message.

According to one aspect of the present application, comprising:
the at least one radio bearer including a multicast MRB, the multicast MRB being used to transmit the data from the MBS.

The present application provides a first node for wireless communications, comprising:
a first receiver, receiving a first message, the first message being used to indicate entering RRC_Inactive state; and
a first processor, determining whether any condition in a first condition set is satisfied in RRC_Inactive state; and performing a first action as a response to that any condition in the first condition set is satisfied;
herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node.

The present application provides a method in a second node for wireless communications, comprising:
transmitting a first message, the first message indicating entering RRC_Inactive state;
herein, a receiver of the first message determines whether any condition in a first condition set is satisfied in RRC_Inactive state; and as a response to that any condition in the first condition set is satisfied, a first action is performed at the receiver of the first message; wherein the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the receiver of the first message.

According to one aspect of the present application, comprising:
the at least one radio bearer being in active state.

According to one aspect of the present application, comprising:
a channel quality of a second cell being used to determine whether the first condition is satisfied;
herein, the second cell is a neighboring cell of the first cell.

According to one aspect of the present application, comprising:
receiving the second message, the second message being used to request resumption of an RRC connection.

According to one aspect of the present application, comprising:
transmitting a third message as a response to receiving the second message, the third message being used to indicate entering RRC_Connected state.

According to one aspect of the present application, comprising:
transmitting a fourth message as a response to receiving the second message, the fourth message being used to maintain RRC_Inactive state; herein, the second message is used to request Cell Handover; the fourth message is used to indicate Cell Handover.

According to one aspect of the present application, comprising:
the at least one radio bearer including a multicast MRB, the multicast MRB being used to transmit the data from the MBS.

The present application provides a second node for wireless communications, comprising:
a second transmitter, transmitting a first message, the first message indicating entering RRC_Inactive state;
herein, a receiver of the first message determines whether any condition in a first condition set is satisfied in RRC_Inactive state; and as a response to that any condition in the first condition set is satisfied, a first action is performed at the receiver of the first message; wherein the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the receiver of the first message.

The present application provides a method in a third node for wireless communications, comprising:
receiving a second message, the second message being used to indicate that RRC reconfiguration is completed; herein, the second message is transmitted in the second cell, the second cell belonging to a target candidate cell set; data from MBS is transmitted via multicast in any target candidate cell in the target candidate cell set.

According to one aspect of the present application, comprising:
a first message being transmitted, the first message being used to indicate entering RRC_Inactive state; a receiver of the first message determines whether any condition in a first condition set is satisfied in RRC_Inactive state; and as a response to that any condition in the first condition set is satisfied, a first action is performed at the receiver of the first message; wherein the first message indicates at least one radio bearer, and the first message is used to determine whether the first action is entering RRC_Idle state or transmitting the second message, the second message being an RRC signaling; the first condition set includes at least a first condition, and at least a channel quality of a first cell being worse than a specific threshold is used to determine whether the first condition is satisfied, the first cell being a serving cell of the receiver of the first message.

According to one aspect of the present application, comprising:
the at least one radio bearer being in active state.

According to one aspect of the present application, comprising:
a channel quality of the second cell being used to determine whether the first condition is satisfied;
herein, the second cell is a neighboring cell of the first cell.

According to one aspect of the present application, comprising:
the receiver of the first message maintaining RRC_Inactive state after the second message has been transmitted.

According to one aspect of the present application, comprising:
the at least one radio bearer including a multicast MRB, the multicast MRB being used to transmit the data from the MBS.

The present application provides a third node for wireless communications, comprising:
a third receiver, receiving a second message, the second message being used to indicate that RRC reconfiguration is completed;
herein, the second message is transmitted in the second cell, the second cell belonging to a target candidate cell set; data from MBS is transmitted via multicast in any target candidate cell in the target candidate cell set.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of transmission of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of hardcore modules in a communication device according to one embodiment of the present application.
FIG. 5 illustrates a flowchart of a radio signal transmission according to one embodiment of the present application.
FIG. 6 illustrates another flowchart of a radio signal transmission according to one embodiment of the present application.
FIG. 7 illustrates a third flowchart of a radio signal transmission according to one embodiment of the present application.
FIG. 8 illustrates a fourth flowchart of a radio signal transmission according to one embodiment of the present application.
FIG. 9 illustrates a schematic diagram of a locational relationship between a first cell and a second cell according to one embodiment of the present application.
FIG. 10 illustrates a structure block diagram of a processing device in a first node according to one embodiment of the present application.
FIG. 11 illustrates a structure block diagram of a processing device in a second node according to one embodiment of the present application.
FIG. 12 illustrates a structure block diagram of a processing device in a third node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused. In the following text the term "embodiment" refers to features that can be implemented according to the invention, but are not necessarily claimed in specific claims.

### Embodiment 1

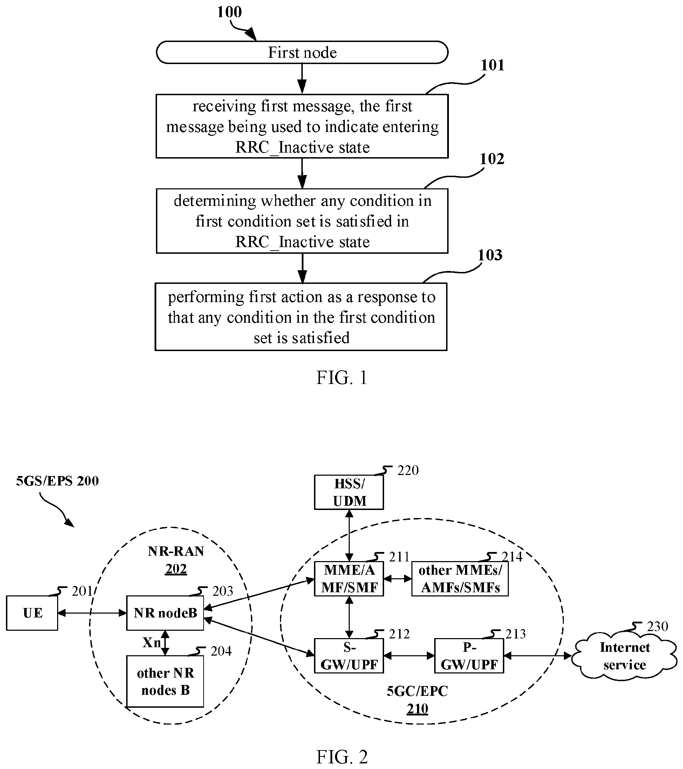

Embodiment 1 illustrates a flowchart of transmission of a first node according to one embodiment of the present application, as shown in FIG. 1.

In Embodiment 1, a first node 100 receives a first message in step 101, the first message being used to indicate entering RRC_Inactive state; and determines in step 102 whether any condition in a first condition set is satisfied in RRC_Inactive state; and performs in step 103 a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node.

In one embodiment, as a response to receiving a first message, entering RRC_Inactive state.

In one embodiment, the phrase entering RRC_Inactive state comprises: entering the RRC inactive state from the RRC connected state.

In one embodiment, the phrase entering RRC_Inactive state comprises: maintaining the RRC inactive state.

In one embodiment, the first message is received via an air interface.

In one embodiment, the air interface is an NR air interface.

In one embodiment, the air interface is a Uu air interface.

In one embodiment, the first message is an upper-layer message.

In one embodiment, the first message is an RRC layer message.

In one embodiment, the first message is RRCRelease; the first message comprises a suspendConfig field.

In one embodiment, the first message is used to indicate suspending of an RRC connection.

In one embodiment, the first message indicates at least one radio bearer.

In one embodiment, the at least one radio bearer is used for transmitting data in RRC_Inactive state.

In one embodiment, the first message comprises a sdt-DRBList (i.e, small data-DRB list).

In one embodiment, the first message comprises a multicast MRBList.

In one embodiment, the at least one radio bearer includes a Data Radio Bearer (DRB).

In one embodiment, the at least one radio bearer includes a multicast MBS Radio Bearer (MRB).

In one embodiment, the first message implicitly indicates the multicast MRB.

In one subembodiment, the first message does not include a bearer identifier of the multicast MRB, the multicast MRB being in active state prior to receiving the first message.

In one embodiment, the multicast MRB is used for transmitting MBS.

In one embodiment, the multicast MRB is a radio bearer configured for receiving MBS via multicast.

In one embodiment, the at least one radio bearer indicated by the first message is used for data transmission while in RRC_Inactive state.

In one embodiment, the first message is used to indicate suspending of a data radio bearer other than the at least one radio bearer.

In one embodiment, the first message is used to indicate suspending of a MBS radio bearer other than the at least one radio bearer.

In one embodiment, measurements for at least one cell are used to determine whether any condition of the first condition set is satisfied.

In one embodiment, determining in RRC_Inactive state whether any condition in a first condition set is satisfied.

In one embodiment, whether there is an active radio bearer transmitted via non-broadcast transmission in RRC_Inactive state is used to determine whether any condition in the first condition set is satisfied.

In one embodiment, the non-broadcast transmission includes unicast transmission.

In one embodiment, the non-broadcast transmission includes multicast transmission.

In one embodiment, performing a first action as a response to that any condition in the first condition set is satisfied.

In one embodiment, the first message indicates at least one radio bearer, whether the at least one radio bearer is active being used to determine whether the first action is entering RRC_Idle state or transmitting a second message.

In one embodiment, the first message indicates at least one radio bearer, a type of the at least one radio bearer being used to determine whether the first action is entering RRC_Idle state or transmitting a second message.

In one embodiment, a type of a radio bearer is DRB.

In one embodiment, a type of a radio bearer is multicast MRB.

In one embodiment, a type of a radio bearer is broadcast MRB.

In one embodiment, a type of a radio bearer is Signaling Radio Bearer (SRB).

In one embodiment, a type of a radio bearer is MRB.

In one embodiment, the first message is used to determine that the first action is entering RRC_Idle state.

In one embodiment, the first message is used to determine that the first action is transmitting a second message.

In one embodiment, a name of the second message includes RRC.

Typically, the second message is used to determine a first RRC state, the first RRC state being an RRC state other than RRC_Idle state.

In one embodiment, the RRC state other than RRC_Idle state is RRC_Inactive state.

In one embodiment, the RRC state other than RRC_Idle state is RRC_Connected state.

In one embodiment, the phrase that the second message is used to determine a first RRC state comprises: the second message being used to determine to maintain a first RRC state, the first RRC state being RRC_Inactive state.

In one embodiment, the phrase that the second message is used to determine a first RRC state comprises: the second message being used to determine to enter into a first RRC state, the first RRC state being RRC_Connected state.

In one embodiment, the first condition set includes at least a first condition, and at least a channel quality of a first cell being worse than a specific threshold is used to determine whether the first condition is satisfied.

In one embodiment, measurements for at least one cell are used to determine whether the first condition is satisfied.

In one embodiment, when a channel quality of a cell is less than a threshold, the channel quality of the cell is worse than the threshold.

In one embodiment, a channel quality of a cell is obtained by a measurement for the cell.

In one embodiment, a channel quality of a cell is obtained by a measurement for the cell upon being processed.

In one embodiment, a channel quality of a cell is obtained by a Reference Signal Received Power (RSRP) measured for the cell upon being processed.

In one embodiment, a channel quality of a cell is obtained by a Reference Signal Received Quality (RSRQ) measured for the cell upon being processed.

In one embodiment, a channel quality of a cell is a reference signal signal-to-noise and interference ratio (RS-SINR) measured for the cell.

In one embodiment, the measurement for a cell includes a measurement for a SS/PBCH block (SSB) transmitted in the cell.

In one embodiment, data from the at least one radio bearer is transmitted via at least one first-type signal.

In one embodiment, each of the at least one first-type signal comprises data from the at least one radio bearer.

In one embodiment, each of the at least one first-type signal is associated with an SSB in the first cell.

In one embodiment, the at least one first-type signal is a Physical Downlink Shared Channel (PDSCH).

In one embodiment, the at least one first-type signal is a Physical Uplink Shared Channel (PUSCH).

In one embodiment, a measurement of the first cell includes a measurement of a SS/PBCH block (SSB) transmitted in the first cell.

In one embodiment, measurements of the first cell include a measurement of an SSB associated with each of the at least one first-type signal received from the first cell.

In one embodiment, the phrase that each of at least one first-type signal is associated with an SSB in the first cell comprises: multi-antenna reception (Rx) parameters of each first-type signal of the at least one first-type signal are the same as multi-antenna Rx parameters of an SSB in the first cell.

In one embodiment, the phrase that each of at least one first-type signal is associated with an SSB in the first cell comprises: multi-antenna reception (Rx) parameters of each first-type signal of the at least one first-type signal can be used to infer multi-antenna Rx parameters of an SSB in the first cell.

In one embodiment, the phrase that each of at least one first-type signal is associated with an SSB in the first cell comprises: the reception of each first-type signal of the at least one first-type signal is used to determine multi-antenna Rx parameters of an SSB in the first cell.

In one embodiment, the multi-antenna Rx parameters include a spatial domain filter.

In one embodiment, the multi-antenna Rx parameters include a Spatial Relation parameter.

In one embodiment, the multi-antenna Rx parameters include a Quasi-CoLocation (QCL) parameter.

In one embodiment, the QCL parameter includes a QCL type.

In one embodiment, the QCL parameter includes at least one of {delay spread, Doppler spread, Doppler shift, path loss, average gain, average delay, Spatial Rx parameters}.

In one embodiment, the specific definition of the QCL parameter can be found in 3GPP TS38.214, section 5.1.5.

In one embodiment, measurements of the first cell include a measurement of a DeModulation Reference Signal (DMRS) included in each of the at least one first-type signal received from the first cell.

In one embodiment, measurements of the first cell include a measurement of a DMRS included in a scheduling signaling for each of the at least one first-type signal received from the first cell.

In one embodiment, the scheduling signaling is a physical layer signaling.

In one embodiment, the scheduling signaling is a Physical Downlink Control Channel (PDCCH).

In one embodiment, the scheduling signaling is a piece of Downlink Control Information (DCI).

In one embodiment, the first cell is a serving cell of the first node.

In one embodiment, the first cell is a Special Cell (SpCell) of the first node.

### Embodiment 2

Embodiment 2 illustrates a schematic diagram of a network architecture according to one embodiment of the present application, as shown in FIG. 2. FIG. 2 illustrates a network architecture 200 of NR 5G, Long-Term Evolution (LTE) and Long-Term Evolution Advanced (LTE-A) systems. The NR 5G or LTE or LTE-A network architecture 200 may be called a 5G System/Evolved Packet System (5GS/EPS) 200 or other suitable terminology. The 5GS/EPS 200 may comprise one or more UEs 201, an NG-RAN 202, a 5G Core Network/Evolved Packet Core (5GC/EPC) 210, a Home Subscriber Server/ Unified Data Management (HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The XnAP protocol on the Xn interface is used to transmit control-plane messages for the wireless network, and the user-plane protocol on the Xn interface is used to transmit user-plane data. The gNB 203 may be called a base station, a base transceiver station, a radio base station, a radio transceiver, a transceiver function, a Basic Service Set (BSS), an Extended Service Set (ESS), a Transmission Reception Point (TRP) or some other applicable terms. In NTN, the gNB 203 can be a satellite, an aircraft or a terrestrial base station relayed through the satellite. The gNB 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, vehicle-mounted equipment and vehicle-mounted communication units, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises operator-compatible IP services, specifically including Internet, Intranet, IP Multimedia Subsystem (IMS) and Packet Switching (PS) Streaming services.

In the following text the term "embodiment" refers to features that can be implemented within Embodiment 2, but are not necessarily claimed in specific dependent claims. In one embodiment, the UE 201 corresponds to a first node in the present application.

In one embodiment, the gNB203 corresponds to a second node in the present application.

In one embodiment, the gNB204 corresponds to a third node in the present application.

In one embodiment, the gNB203 is a Macro Cell base station.

In one embodiment, the gNB203 is a Micro Cell base station.

In one embodiment, the gNB203 is a Pico Cell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the gNB204 is a Macro Cell base station.

In one embodiment, the gNB204 is a Micro Cell base station.

In one embodiment, the gNB204 is a Pico Cell base station.

In one embodiment, the gNB204 is a Femtocell.

In one embodiment, the gNB204 is a base station supporting large time-delay difference.

In one embodiment, the gNB204 is a flight platform.

In one embodiment, the gNB204 is satellite equipment.

In one embodiment, a radio link from the UE201 to the gNB203 is uplink.

In one embodiment, a radio link from the gNB203 to the UE201 is downlink.

In one embodiment, a radio link from the UE201 to the gNB204 is uplink.

In one embodiment, a radio link from the gNB204 to the UE201 is downlink.

In one embodiment, the UE201 and the gNB203 are connected by a Uu interface.

In one embodiment, the UE201 and the gNB203 are connected by a Uu interface.

### Embodiment 3

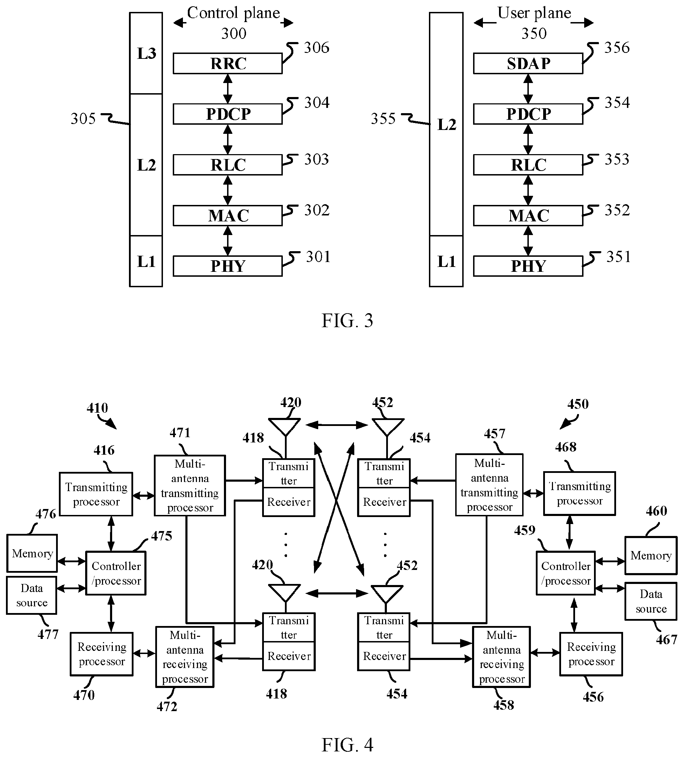

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. FIG. 3 shows the radio protocol architecture of the control plane 300 of the UE and gNB in three layers: layer 1, layer 2 and layer 3. The layer 1 (L1) is the lowest layer which performs various signal processing functions of PHY layers. The L1 is called PHY 301 in the present application. The layer 2 (L2) 305 is above the PHY 301, and is in charge of the link between the UE and gNB via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the gNB on the network side. The PDCP sublayer 304 provides data encryption and integrity protection, and the PDCP sublayer 304 also provides support for inter-cell mobility of the UE between gNBs. The RLC sublayer 303 provides packet segmentation and reassembly, retransmission of a lost packet via ARQ, and it also provides duplicate packet detection and protocol error detection. The MAC sublayer 302 provides mapping between the logical and transport channels and multiplexing of logical channel IDs. The MAC sublayer 302 is also responsible for allocating between UEs various radio resources (i.e., resource block) in a cell. The MAC sublayer 302 is also responsible for Hybrid Automatic Repeat Request (HARQ) operations. In the control plane 300, The Radio Resource Control (RRC) sublayer 306 in the L3 layer is responsible for acquiring radio resources (i.e., radio bearer) and configuring the lower layer using an RRC signaling between the gNB and the UE. The radio protocol architecture in the user plane 350 comprises the L1 layer and the L2 layer. In the user plane 350, the radio protocol architecture used for a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between Quality of Service (QoS) streams and a Data Radio Bearer (DRB), so as to support diversified traffics. The radio protocol architecture of the UE in the user plane 350 may include some or all of the protocol sublayers of the SDAP sublayer 356, the PDCP sublayer 354, the RLC sublayer 353, and the MAC sublayer 352 at the L2 layer. Although not described in FIG. 3, the UE may comprise several higher layers above the L2 355, such as a network layer (i.e., IP layer) terminated at a P-GW of the network side and an application layer terminated at the other side of the connection fi.e., a peer UE, a server, etc.).

In one embodiment, the radio protocol architecture in FIG. 3 is applicable to a first node in the present application.

In one embodiment, the radio protocol architecture in FIG. 3 is applicable to a second node in the present application.

In one embodiment, the radio protocol architecture in FIG. 3 is applicable to a third node in the present application.

In one embodiment, entities of multiple sublayers of the control plane in FIG. 3 form a Signaling Radio Bearer (SRB) vertically.

In one embodiment, entities of multiple sublayers of the user plane in FIG. 3 form a DRB vertically.

In one embodiment, entities of multiple sublayers of the user plane in FIG. 3 form a multicast MRB vertically.

In one embodiment, the PDCP sublayer of the control plane in FIG. 3 provides a signaling radio bearer to the RRC sublayer.

In one embodiment, the PDCP sublayer of the user plane in FIG. 3 provides a data radio bearer to the SDAP sublayer.

In one embodiment, the PDCP sublayer of the user plane in FIG. 3 provides an MBS radio bearer to the SDAP sublayer.

In one embodiment, the first message in the present application is generated by the RRC306.

In one embodiment, the second message in the present application is generated by the RRC306.

In one embodiment, the third message in the present application is generated by the RRC306.

In one embodiment, the fourth message in the present application is generated by the RRC306.

In one embodiment, the at least one first-type signal in the present application is generated by the PHY301 or the PHY351.

In one embodiment, the L2 305 belongs to an upper layer.

In one embodiment, the RRC sublayer 306 in the L3 belongs to an upper layer.

### Embodiment 4

Embodiment 4 illustrates a schematic diagram of hardcore modules in a communication device according to one embodiment of the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a data source 477, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network or from a data source 477 is provided to the controller/processor 475. The core network and data source 477 represents all protocol layers above the L2 layer. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 410 side and the mapping of signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In a transmission from the second communication device 410 to the first communication device 450, the controller/processor 459 provides de-multiplexing between a transport channel and a logical channel, packet reassembling, decrypting, header decompression, control signal processing so as to recover a higher-layer packet from the second communication device 410. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication device 410 to the first communication device 450, the controller/processor 459 performs header compression, encryption, packet segmentation and reordering, and multiplexing between a logical channel and a transport channel so as to provide the L2 layer functions used for the user plane and the control plane. The controller/processor 459 is also responsible for a retransmission of a lost packet, and a signaling to the second communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device 450. The higher-layer packet coming from the controller/processor 475 may be provided to the core network, or all protocol layers above the L2, or, various control signals can be provided to the core network or L3 for processing.

In one embodiment, the first communication device 450 comprises at least one processor and at least one memory. The at least one memory comprises computer program codes; the at least one memory and the computer program codes are configured to be used in collaboration with the at least one processor. The first communication device 450 at least receives a first message, the first message being used to indicate entering RRC_Inactive state; and determines whether any condition in a first condition set is satisfied in RRC_Inactive state; and performs a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node.

In one embodiment, the first communication device 450 comprises a memory that stores a computer readable instruction program. The computer readable instruction program generates actions when executed by at least one processor. The actions include: receiving a first message, the first message being used to indicate entering RRC_Inactive state; and determining whether any condition in a first condition set is satisfied in RRC_Inactive state; and performing a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node.

In one embodiment, the second communication device 410 comprises at least one processor and at least one memory. The at least one memory comprises computer program codes; the at least one memory and the computer program codes are configured to be used in collaboration with the at least one processor. The second communication device 410 at least transmits a first message, the first message being used to indicate entering RRC_Inactive state; herein, a receiver of the first message determines whether any condition in a first condition set is satisfied in RRC_Inactive state; and as a response to that any condition in the first condition set is satisfied, a first action is performed at the receiver of the first message; where the first message indicates at least one radio bearer, and the first message is used to determine whether the first action is entering RRC_Idle state or transmitting the second message, the second message being an RRC signaling; the first condition set includes at least a first condition, and at least a channel quality of a first cell being worse than a specific threshold is used to determine whether the first condition is satisfied, the first cell being a serving cell of the receiver of the first message.

In one embodiment, the second communication device 410 comprises a memory that stores a computer readable instruction program. The computer readable instruction program generates actions when executed by at least one processor. The actions include: transmitting a first message, the first message being used to indicate entering RRC_Inactive state; herein, a receiver of the first message determines whether any condition in a first condition set is satisfied in RRC_Inactive state; and as a response to that any condition in the first condition set is satisfied, a first action is performed at the receiver of the first message; where the first message indicates at least one radio bearer, and the first message is used to determine whether the first action is entering RRC_Idle state or transmitting the second message, the second message being an RRC signaling; the first condition set includes at least a first condition, and at least a channel quality of a first cell being worse than a specific threshold is used to determine whether the first condition is satisfied, the first cell being a serving cell of the receiver of the first message.

In one embodiment, the second communication device 410 comprises at least one processor and at least one memory. The at least one memory comprises computer program codes; the at least one memory and the computer program codes are configured to be used in collaboration with the at least one processor. The second communication device 410 at least receives a second message, the second message being used to indicate that RRC reconfiguration is completed; herein, the second message is transmitted in the second cell, the second cell belonging to a target candidate cell set; data from MBS is transmitted via multicast in any target candidate cell in the target candidate cell set.

In one embodiment, the second communication device 410 comprises a memory that stores a computer readable instruction program. The computer readable instruction program generates actions when executed by at least one processor. The actions include: receiving a second message, the second message being used to indicate that RRC reconfiguration is completed; herein, the second message is transmitted in the second cell, the second cell belonging to a target candidate cell set; data from MBS is transmitted via multicast in any target candidate cell in the target candidate cell set.

In one embodiment, the first communication device 450 corresponds to a first node in the present application; the second communication device 410 corresponds to a second node in the present application.

In one embodiment, the first communication device 450 corresponds to a first node in the present application; the second communication device 410 corresponds to a third node in the present application.

In one embodiment, the first communication device 450 is a UE.

In one embodiment, the second communication device 410 is a base station.

In one embodiment, at least one of the antenna 420, the transmitter 418, the multi-antenna transmitting processor 471, the transmitting processor 416 or the controller/processor 475 is used for transmitting a first message in the present application.

In one embodiment, at least one of the antenna 452, the receiver 454, the multi-antenna receiving processor 458, the receiving processor 456 or the controller/processor 459 is used for receiving a first message in the present application.

In one embodiment, at least one of the antenna 452, the transmitter 454, the multi-antenna transmitting processor 457, the transmitting processor 468 or the controller/processor 459 is used for transmitting a second message in the present application.

In one embodiment, at least one of the antenna 420, the receiver 418, the multi-antenna receiving processor 472, the receiving processor 470 or the controller/processor 475 is used for receiving a second message in the present application.

In one embodiment, at least one of the antenna 420, the transmitter 418, the multi-antenna transmitting processor 471, the transmitting processor 416 or the controller/processor 475 is used for transmitting a third message in the present application.

In one embodiment, at least one of the antenna 452, the receiver 454, the multi-antenna receiving processor 458, the receiving processor 456 or the controller/processor 459 is used for receiving a third message in the present application.

In one embodiment, at least one of the antenna 420, the transmitter 418, the multi-antenna transmitting processor 471, the transmitting processor 416 or the controller/processor 475 is used for transmitting a fourth message in the present application.

In one embodiment, at least one of the antenna 452, the receiver 454, the multi-antenna receiving processor 458, the receiving processor 456 or the controller/processor 459 is used for receiving a fourth message in the present application.

### Embodiment 5

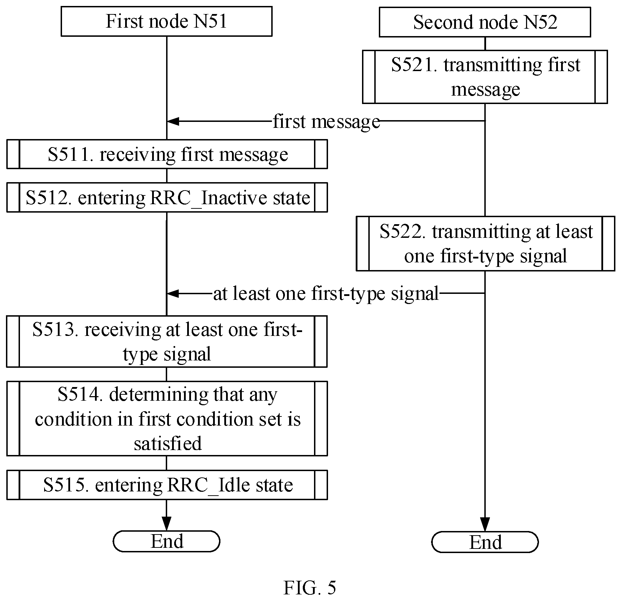

Embodiment 5 illustrates a flowchart of a radio signal transmission according to one embodiment of the present application, as shown in FIG. 5. In FIG. 5, a first node N51 and a second node N52 are in communication via an air interface. It should be particularly noted that the sequence illustrated herein does not set any limit to the signal transmission order or implementation order in the present application.

The **first node N51** receives a first message in step S511; enters RRC_Inactive state in step S512; receives at least one first-type signal in step S513; determines that any condition in a first condition set is satisfied in step S514; and enters RRC_Idle state in step S515.

The **second node N52** transmits a first message in step S521; and transmits at least one first-type signal in step S522.

In Embodiment 5, receiving a first message, the first message being used to indicate entering RRC_Inactive state; and determining whether any condition in a first condition set is satisfied in RRC_Inactive state; and performing a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node; the at least one radio bearer is in active state; a channel quality of the second cell is used to determine whether the first condition is satisfied; herein, the second cell is a neighboring cell of the first cell.

In Embodiment 5, the first message indicates at least one radio bearer, the at least one radio bearer not including a multicast MRB.

In one embodiment, the at least one first-type signal is used for transmitting data from the at least one radio bearer.

It is to be noted that FIG. 5 only depicts the case of the second node transmitting at least one first-type signal to the first node; considering that the at least one radio bearer may be used for uplink transmission, thus the FIG. 5, although not shown, does not exclude the case of the first node transmitting the at least one first-type signal to the second node.

In one embodiment, as a response to any condition in the first condition set being satisfied, entering RRC_Idle state from RRC_Inactive state; where the at least one radio bearer does not include a multicast MRB.

In one subembodiment, the at least one radio bearer is in active state.

In one subembodiment, the at least one radio bearer is not in active state.

In one embodiment, the second node is a base station of a serving cell of the first node.

In one embodiment, the second node is a base station of a primary cell (PCell) of the first node.

In one embodiment, when receiving or transmitting data from the at least one radio bearer, the at least one radio bearer is in active state.

In one embodiment, when the at least one radio bearer is not suspended, the at least one radio bearer is in active state.

In one embodiment, when RRC configuration of the at least one radio bearer is not released, the at least one radio bearer is in active state.

In one embodiment, when a Packet Data Convergence Protocol (PDCP) entity corresponding to the at least one radio bearer is not suspended, the at least one radio bearer is in active state.

In one embodiment, when a PDCP entity corresponding to the at least one radio bearer is not released, the at least one radio bearer is in active state.

In one embodiment, the first receiver receives at least one first-type signal, each of the at least one first-type signal comprising data from the at least one radio bearer.

In one embodiment, the first processor transmits at least one first-type signal, each of the at least one first-type signal comprising data from the at least one radio bearer.

In one embodiment, a channel quality of a second cell is used to determine whether the first condition is satisfied; herein, the second cell is a neighboring cell of the first cell.

In one embodiment, a measurement of the second cell includes a measurement of a SS/PBCH block (SSB) transmitted in the second cell.

In one embodiment, the channel quality of the first cell being worse than the specific threshold is used to trigger a channel measurement performed for the second cell; where the frequency of the first cell and the frequency of the second cell are intra-frequency, or the frequency of the first cell and the frequency of the second cell are inter-frequency and the first cell has a frequency priority that is not lower than that of the second cell; when the channel quality of the first cell is worse than the channel quality of the second cell, it is determined that the first condition is satisfied; where the specific threshold is network-configured or pre-configured.

In one embodiment, a cell's channel quality Srxlev = Qᵣₓₗₑᵥₘₑₐₛ - (Qᵣₓₗₑᵥₘᵢₙ + Q_{rxlevminoffset}) - P_{compensation} - Qoffsetₜₑₘₚ; where the Qᵣₓₗₑᵥₘₑₐₛ is a cell reception level value being measured, which refers to RSRP; the Qᵣₓₗₑᵥₘᵢₙ is a minimum required reception level for a cell as configured by the network; the Q_{rxlevminoffset} is an offset configured by the network for the Qᵣₓₗₑᵥₘᵢ; and the P_{compensation} is a compensation value, for FR1 (i.e., frequency 1) and FR2 (i.e., frequency 2) different values are configured by the network; the Q_{offsettemp} is an offset temporarily configured to the cell.

In one embodiment, a cell's channel quality Squal = Q_{qualmeas} - (Q_{qualmin} + Q_{qualminoffset}) - Qoffsetₜₑₘₚ; where the Q_{qualmea} is a cell quality value being measured, which refers to RSRQ; the Q_{qualmin} is a minimum required quality level for a cell as configured by the network; the Q_{qualminoffset} is an offset configured by the network for the Q_{qualmin}; and the Q_{offsettemp} is an offset temporarily configured to the cell.

In one embodiment, the Srxlev and the Squal are each expressed in dB.

In one embodiment, when the channel quality of the first cell is worse than the channel quality of the second cell, it is determined that the first condition is satisfied; where the specific threshold is the channel quality of the second cell, the at least one radio bearer indicated by the first message is active, and the at least one radio bearer does not include a multicast MRB.

In one embodiment, when the channel quality of the first cell is worse than the channel quality of the second cell, and the second cell belongs to a different PLMN (i.e., Public Land Mobile Network) or SNPN (i.e., Stand-alone Non-Public Network) than the first cell, it is determined that the first condition is satisfied; where the specific threshold is the channel quality of the second cell.

In one embodiment, the phrase that the channel quality of the first cell is worse than the channel quality of the second cell comprises: the channel quality of the second cell being better than the channel quality of the first cell within a first time length.

In one embodiment, the phrase that the channel quality of the first cell is worse than the channel quality of the second cell comprises: the channel quality of the second cell being higher than the channel quality of the first cell by a third threshold within a first time length.

In one subembodiment of the above two embodiments, the frequency of the first cell and the frequency of the second cell are intra-frequency, or the frequency of the first cell and the frequency of the second cell are inter-frequency, and the first cell is of the same frequency priority as the second cell.

In one subembodiment of the above two embodiments, the first node is camped on the first cell for more than 1 second.

In one embodiment, the first time length is Treselection_{RAT}.

In one embodiment, the first time length is configured by the network.

In one embodiment, the first time length is not less than 0.

In one embodiment, the first time length is expressed in milliseconds (ms).

In one embodiment, the first time length is expressed in seconds (s).

In one embodiment, the third threshold is configured by the network.

In one embodiment, the third threshold is pre-configured.

In one embodiment, the third threshold is specified.

In one embodiment, the third threshold is expressed in dB.

In one embodiment, the third threshold is configured for cell reselection.

In one embodiment, the phrase that the channel quality of the first cell is worse than the channel quality of the second cell comprises: the channel quality of the first cell and the channel quality of the second cell meeting the conditions of cell reselection as defined in the protocol 38.304 of the 3GPP standard.

In one embodiment, the phrase that the channel quality of the first cell is worse than the channel quality of the second cell comprises: the channel quality of the first cell and the channel quality of the second cell meeting the conditions of cell handover in an inactive state as defined in the 3GPP standard.

In one embodiment, when the channel quality of the first cell is worse than a first threshold and the channel quality of the second cell is better than a second threshold, it is determined that the first condition is satisfied; where the specific threshold is the first threshold, the at least one radio bearer indicated by the first message is active, and the at least one radio bearer does not include a multicast MRB.

In one embodiment, when the channel quality of the first cell is worse than a first threshold and the channel quality of the second cell is better than a second threshold, and the second cell belongs to a different PLMN or SNPN than the first cell, it is determined that the first condition is satisfied; where the specific threshold is the first threshold.

In one embodiment, when a channel quality of a cell is greater than a threshold, the channel quality of the cell is better than the threshold.

In one embodiment, the phrase that the channel quality of the first cell is worse than a first threshold and the channel quality of the second cell is better than a second threshold comprises: the channel quality of the first cell being worse than a first threshold within a second time length, and the channel quality of the second cell being better than a second threshold within a third time length.

In one subembodiment, the frequency of the first cell and the frequency of the second cell are inter-frequency, and the first cell is of a higher frequency priority than the second cell

In one subembodiment, the first node is camped on the first cell for more than 1 second.

In one embodiment, the first threshold is Thresh_{Serving, LowQ}, and the second threshold is Thresh_{X}, _{LowQ}, where the channel quality of the first cell and the channel quality of the second channel are each expressed as Squal.

In one embodiment, the first threshold is Thresh_{Serving, LowP}, and the second threshold is Thresh_{X}, _{LowP}, where the channel quality of the first cell and the channel quality of the second channel are each expressed as Srxlev.

In one embodiment, the second time length and the third time length are Treselection_{RAT}, respectively.

In one embodiment, the second time length and the third time length are network configured, respectively.

In one embodiment, the second time length is not less than 0.

In one embodiment, the third time length is not less than 0.

In one embodiment, the second time length and the third time length are expressed in milliseconds, respectively.

In one embodiment, the second time length and the third time length are expressed in seconds, respectively.

In one embodiment, the first threshold and the second threshold are network-configured or pre-configured, respectively.

In one embodiment, the first threshold and the second threshold are configured for cell reselection, respectively.

In one embodiment, the phrase that the channel quality of the first cell is worse than a first threshold and the channel quality of the second cell is better than a second threshold comprises: the channel quality of the first cell and the channel quality of the second cell meeting the conditions of cell reselection as defined in the protocol 38.304 of the 3GPP standard.

In one embodiment, the phrase that the channel quality of the first cell is worse than a first threshold and the channel quality of the second cell is better than a second threshold comprises: the channel quality of the first cell and the channel quality of the second cell meeting the conditions of cell handover in an inactive state as defined in the 3GPP standard.

In one embodiment, the first message indicates at least one radio bearer and any of the at least one radio bearer is a DRB, as a response to any condition in the first condition set being satisfied, entering RRC_Idle state.

In one embodiment, the first message indicates at least one radio bearer and the at least one radio bearer does not include a multicast MRB, as a response to any condition in the first condition set being satisfied, entering RRC_Idle state.

In one embodiment, the first message indicates that data from the MBS is not received via multicast in RRC_Inactive state, as a response to any condition in the first condition set being satisfied, entering RRC_Idle state.

In one embodiment, entering RRC_Idle state from RRC_Inactive state is implemented by the UE itself.

In one subembodiment, configuration information of the at least one radio bearer is released.

In one subembodiment, the suspendConfig is released.

In one subembodiment, the at least one radio bearer is released.

In one subembodiment, that the RRC connection is released is indicated to an upper layer.

In one subembodiment, segments of any segmented RRC message are discarded.

In one embodiment, the first condition set comprises a condition for entering RRC_Idle state while in RRC_Inactive state.

In one embodiment, the first condition set comprises a condition for entering RRC_Idle state while in RRC_Inactive state and in a Small Data Transmission (SDT) procedure.

### Embodiment 6

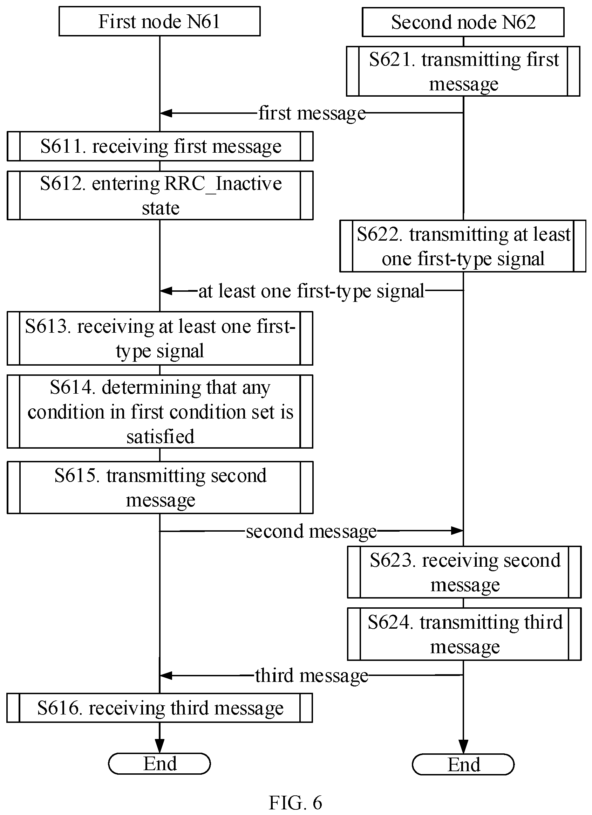

Embodiment 6 illustrates another flowchart of a radio signal transmission according to one embodiment of the present application, as shown in FIG. 6. In FIG. 6, a first node N61 and a second node N62 are in communication via an air interface. It should be particularly noted that the sequence illustrated herein does not set any limit to the signal transmission order or implementation order in the present application.

The **first node N61** receives a first message in step S611; enters RRC_Inactive state in step S612; receives at least one first-type signal in step S613; determines that any condition in a first condition set is satisfied in step S614; transmits a second message in step S615; and receives a third message in step S616.

The **second node N62** transmits a first message in step S621; transmits at least one first-type signal in step S622; receives a second message in step S623; and transmits a third message in step S624.

In Embodiment 6, receiving a first message, the first message being used to indicate entering RRC_Inactive state; and determining whether any condition in a first condition set is satisfied in RRC_Inactive state; and performing a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node; the at least one radio bearer is in active state; a channel quality of the second cell is used to determine whether the first condition is satisfied; herein, the second cell is a neighboring cell of the first cell; the second message is used to request resumption of an RRC connection; herein, the second message is transmitted in the first cell; receiving a third message as a response to transmitting the second message, the third message being used to indicate entering RRC_Connected state; the at least one radio bearer includes a multicast MRB, the multicast MRB being used to transmit the data from the MBS.

In Embodiment 6, the first message indicates at least one radio bearer, the at least one radio bearer including a multicast MRB.

In one embodiment, the at least one radio bearer includes only a multicast MRB or the at least one radio bearer also includes a DRB.

In one embodiment, the multicast MRB included in the at least one radio bearer is active and the multicast MRB is used to transmit data from the MBS.

In one embodiment, the at least one first-type signal is used to transmit data from the multicast MRB.

In one embodiment, the second message is transmitted as a response to any condition in the first condition set being satisfied.

In one subembodiment, the multicast MRB included in the at least one radio bearer is in active state.

It is to be noted that FIG. 6 only depicts the case of the second node transmitting at least one first-type signal to the first node; considering that the at least one radio bearer may be used for uplink transmission, thus the FIG. 6, although not shown, does not exclude the case of the first node transmitting the at least one first-type signal to the second node.

In one embodiment, when the channel quality of the first cell is worse than the channel quality of the second cell, it is determined that the first condition is satisfied; where the specific threshold is the channel quality of the second cell, the at least one radio bearer includes a multicast MRB, the multicast MRB included in the at least one radio bearer indicated by the first message being in active state.

In one embodiment, when the channel quality of the first cell is worse than a first threshold and the channel quality of the second cell is better than a second threshold, it is determined that the first condition is satisfied; where the specific threshold is the first threshold, the at least one radio bearer includes a multicast MRB, the multicast MRB included in the at least one radio bearer indicated by the first message being in active state.

In one embodiment, the channel quality of the first cell is worse than the channel quality of the second cell; where the channel quality of the first cell and the channel quality of the second cell satisfy: Mn + Ofn + Ocn - Hys > Mp + Ofp + Ocp + Off; where the channel quality of the first cell is Mp + Ofp + Ocp; the channel quality of the second cell is Mn + Ofn + Ocn - Hys; the third threshold is Off, the Mp is the measurement result of the first cell, the Ofp is a measurement-object-specific offset value for the first cell, and the Ocp is a cell-specific offset value of the first cell; the Mn is the measurement result of the second cell, the Ofn is a measurement-object-specific offset value of a reference signal for the second cell, the Ocn is a cell-specific offset value for the second cell, and the Hys is a hysteresis parameter for this event.

In one embodiment, when a measurement result of a cell is RSRP, Mn and Mp are each expressed in dBm; when the measurement result of a cell is RSRQ or RS-SINR, Mn and Mp are each expressed in dB.

In one embodiment, the Ofn, the Ocn, the Ofp, the Ocp, the Hys and the Off are expressed in dB, respectively.

In one embodiment, the third threshold is configured to trigger the first node's entering RRC_Connected state from RRC_Inactive state.

In one embodiment, the third threshold is configured to trigger the first node's performing of CHO in RRC_Inactive state.

In one embodiment, the phrase that the channel quality of the first cell is worse than the channel quality of the second cell comprises: the channel quality of the first cell and the channel quality of the second cell meeting an entering condition for an A3 event as defined in protocol 38.311 of the 3GPP standard.

In one embodiment, the channel quality of the first cell satisfies Mp + Hys < Thresh1; the channel quality of the second cell satisfies Mn + Ofn + Ocn - Hys > Thresh2; where the XXX, the channel quality of the first cell is Mp + Hys, and the channel quality of the second cell is Mn + Ofn + Ocn - Hys, the Thresh1 is the first threshold, the Thresh2 is the second threshold, the Mp is the measurement result of the first cell, the Hys is a hysteresis parameter of this event, and the Mn is the measurement result of the second cell, the Ofn is a measurement-object-specific offset value for the second cell, and the Ocn is a cell-specific offset value for the second cell.

In one embodiment, the Thresh1 is expressed in the same units as the Mp.

In one embodiment, the Thresh2 is expressed in the same units as the Mn.

In one embodiment, the phrase that the channel quality of the first cell is worse than a first threshold and the channel quality of the second cell is better than a second threshold comprises: the channel quality of the first cell and the channel quality of the second cell meeting an entering condition for an A5 event as defined in protocol 38.311 of the 3GPP standard.

In one embodiment, the first threshold and the second threshold are each configured to trigger the first node's entering RRC_Connected state from RRC_Inactive state.

In one embodiment, the first threshold and the second threshold are each configured to trigger the first node's performing of Conditional Handover (CHO) in RRC_Inactive state.

In one embodiment, the second message is transmitted as a response to any condition in the first condition set being satisfied.

In one embodiment, the second message is transmitted in the first cell.

In one embodiment, the phrase that the second message is transmitted in the first cell comprises: the second message being transmitted using an air interface resource of the first cell.

In one embodiment, receiving a third message as a response to transmitting the second message, the third message being used to indicate entering RRC_Connected state from RRC_Inactive state.

In one embodiment, the first message indicates at least one radio bearer and the at least one radio bearer includes a multicast MRB, as a response to any condition in the first condition set being satisfied, transmitting the second message.

In one embodiment, the multicast MRB is not suspended after receiving the first message.

In one embodiment, the multicast MRB is active before receiving the first message and after receiving the first message.

In one embodiment, the second message is used to request resumption of an RRC connection.

In one embodiment, the second message is RRCResumeRequest.

In one embodiment, the second message is RRCResumeRequest1.

In one embodiment, the second message indicates that the reason for requesting resumption of the RRC connection is to receive MBS services.

In one embodiment, a target receiver of the second message is the second node.

In one embodiment, receiving a third message as a response to transmitting the second message, the third message being used to indicate entering RRC_Connected state.

In one embodiment, the third message is an RRC signaling.

In one embodiment, the third message is RRCResume, the third message being used to indicate resumption of RRC connection.

In one embodiment, the third message comprises a reconfiguration field for the at least one radio bearer.

In one embodiment, the third message comprises an RRC reconfiguration field.

In one embodiment, as a response to receiving the third message, the at least one radio bearer is activated.

In one embodiment, as a response to receiving the third message, the at least one radio bearer is reconfigured.

In one embodiment, the third message is RRCSetup, the third message being used to indicate establishment of RRC connection.

In one embodiment, as a response to receiving the third message, SRB1 is established.

In one embodiment, the first receiver receives an RRCReconfiguration message, the RRCReconfiguration message being used to configure the MRB included in the at least one radio bearer; where a time of reception of the RRCReconfiguration message is later than a time of reception of the third message, the third message being RRCSetup.

In one embodiment, after entering RRC_Connected state, the first node reports a measurement report and the second node indicates based on the measurement report that the first node performs cell handover.

In the above method, by performing cell handover after transitioning from RRC_Inactive state to RRC_Connected state, packet loss can be effectively reduced while reducing the standard complexity.

In one embodiment, the first condition set includes a condition of transmitting the second message while in RRC_Inactive state and receiving MBS via multicast; where the second message is used to request resumption of an RRC connection.

In one embodiment, the first condition set includes a condition of transmitting the second message while in RRC_Inactive state and receiving MBS via multicast; where the second message is used to indicate RRC reconfiguration completion.

### Embodiment 7

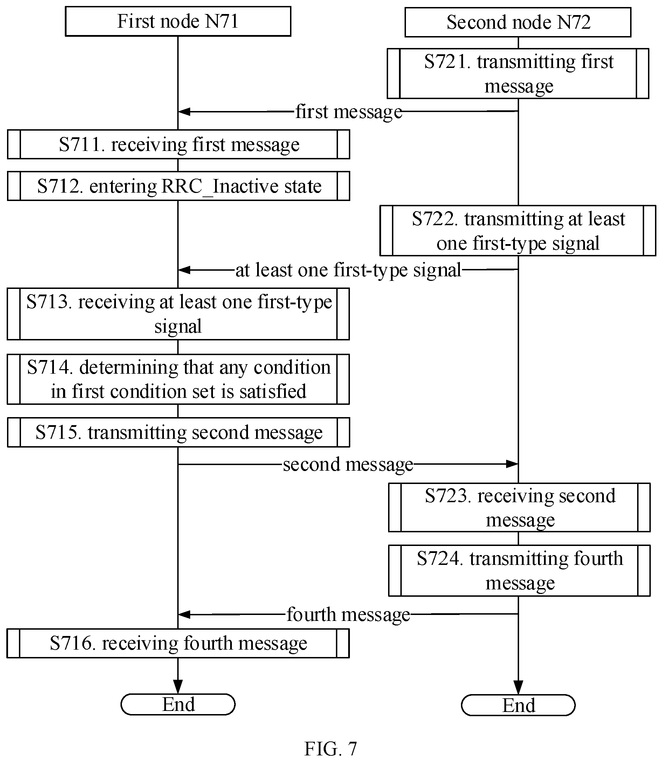

Embodiment 7 illustrates a third flowchart of radio signal transmission according to one embodiment of the present application, as shown in FIG. 7. In FIG. 7, a first node N71 and a second node N72 are in communication via an air interface. It should be particularly noted that the sequence illustrated herein does not set any limit to the signal transmission order or implementation order in the present application.

The **first node N71** receives a first message in step S711; enters RRC_Inactive state in step S712; receives at least one first-type signal in step S713; determines that any condition in a first condition set is satisfied in step S714; transmits a second message in step S715; and receives a fourth message in step S716.

The **second node N72** transmits a first message in step S721; transmits at least one first-type signal in step S722; receives a second message in step S723; and transmits a fourth message in step S724.

In Embodiment 7, receiving a first message, the first message being used to indicate entering RRC_Inactive state; and determining whether any condition in a first condition set is satisfied in RRC_Inactive state; and performing a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node; the at least one radio bearer is in active state; a channel quality of the second cell is used to determine whether the first condition is satisfied; herein, the second cell is a neighboring cell of the first cell; receiving a fourth message as a response to transmitting the second message, the fourth message being used to maintain RRC_Inactive state; herein, the second message is used to request Cell Handover; the fourth message is used to indicate Cell Handover; the at least one radio bearer includes a multicast MRB, the multicast MRB being used to transmit the data from the MBS.

In Embodiment 7, the first message indicates at least one radio bearer, the at least one radio bearer including a multicast MRB.

Differing from Embodiment 6, in Embodiment 7, a fourth message is received as a response to transmitting the second message, the fourth message being used to maintain RRC_Inactive state.

In one embodiment, the second message is used to request resumption of an RRC connection.

In one embodiment, the second message indicates that the reason for requesting resumption of the RRC connection is to request cell handover.

In one embodiment, the phrase that the second message is used to request Cell Handover comprises: the second message being used to request a cell update.

In one embodiment, the second message comprises a second cell identifier.

In one embodiment, the second cell identifier is used to identify the second cell.

In one embodiment, the first transmitter transmits a fifth message, the fifth message comprising the second cell identifier.

In one embodiment, the fifth message and the second message belong to a same MAC Protocol Data Unit (PDU).

In one embodiment, the fifth message and the second message belong to different MAC PDUs.

In one embodiment, the fifth message is transmitted after the second message is transmitted.

In one embodiment, the fifth message is an RRC signaling.

In one embodiment, the fifth message comprises UE reporting information.

In one embodiment, a name of the fifth message includes mobility.

In one embodiment, a name of the fifth message includes Inactive.

In one embodiment, the fifth message is UEAssistanceInformation.

In one embodiment, the fifth message is VarMeasIdleReport.

In one embodiment, the fifth message is VarMeasInactiveReport.

In one embodiment, the fifth message is VarMobilityInactiveReport.

In one embodiment, the fifth message is a MAC Control Element (CE).

In one embodiment, a logical channel identity of the MAC CE is a positive integer between 35-44 including 35 and 44.

In one embodiment, a logical channel identity of the MAC CE is a positive integer between 64-313 including 64 and 313.

In one embodiment, the fourth message is an RRC signaling.

In one embodiment, the fourth message is RRCRelease; the fourth message being used to maintain RRC_Inactive state.

Typically, the fourth message comprises a field for indicating cell handover.

In one embodiment, the fourth message is used to indicate cell handover.

In one embodiment, the fourth message is used to indicate cell handover in an inactive state.

In one embodiment, the fourth message comprises a suspendConfig field.

In one embodiment, the fourth message comprises a ReconfigurationwithSync field.

In one embodiment, the fourth message comprises a reconfiguration field for the at least one radio bearer; where the at least one radio bearer is active.

In one embodiment, the fourth message comprises an RRC reconfiguration field.

In one embodiment, the fourth message comprises a reconfiguration field for an MRB included in the at least one radio bearer.

In one embodiment, the fourth message comprises a configuration message for an MRB receiving the MBS.

In one embodiment, after obtaining the second cell, the second node sends an inactive cell handover request to a base station of the second cell, and the base station of the second cell sends as feedback an inactive cell handover response comprising a configuration message for the MRB transmitting the MBS in the second cell; and the second node sends via the fourth message the configuration message for the MRB transmitting the MBS in the second cell to the first node; the first node reconfigures the MRB and starts to receive the MBS in the second cell.

### Embodiment 8

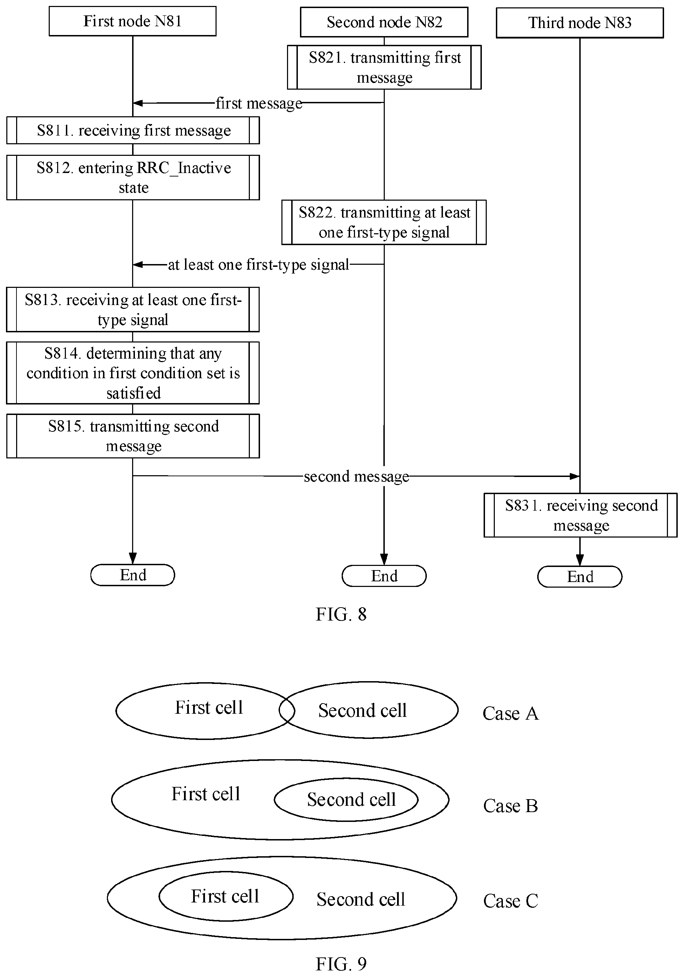

Embodiment 8 illustrates a fourth flowchart of a radio signal transmission according to one embodiment of the present application, as shown in FIG. 8. In FIG. 8, a first node N81 and a second node N82 are in communication via an air interface, while the first node N81 and a third node N83 are in communication via an air interface. It should be particularly noted that the sequence illustrated herein does not set any limit to the signal transmission order or implementation order in the present application.

The **first node N81** receives a first message in step S811; enters RRC_Inactive state in step S812; receives at least one first-type signal in step S813; determines that any condition in a first condition set is satisfied in step S814; and transmits a second message in step S815.

The **second node N82** transmits a first message in step S821; and transmits at least one first-type signal in step S822.

The **third node N83** receives a second message in step S831.

In Embodiment 8, receiving a first message, the first message being used to indicate entering RRC_Inactive state; and determining whether any condition in a first condition set is satisfied in RRC_Inactive state; and performing a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node; the at least one radio bearer is in active state; a channel quality of the second cell is used to determine whether the first condition is satisfied; herein, the second cell is a neighboring cell of the first cell; the second message is used to indicate that RRC reconfiguration is completed; herein, the second message is transmitted in the second cell, the second cell belonging to a target candidate cell set; data from MBS is transmitted via multicast in any target candidate cell in the target candidate cell set; and the first node maintains RRC_Inactive state after the second message is transmitted; the at least one radio bearer includes a multicast MRB, the multicast MRB being used to transmit the data from the MBS.

In Embodiment 8, the first message indicates at least one radio bearer, the at least one radio bearer including a multicast MRB.

Differing from Embodiment 6 and Embodiment 7, in Embodiment 8, the second message is transmitted in the second cell.

In one embodiment, the third node is a base station of the second cell.

In one embodiment, the third node transmits the MBS via multicast.

In one embodiment, the first node maintains RRC_Inactive state after the second message is transmitted.

In one embodiment, the phrase that the second message is transmitted in the second cell comprises: the second message being transmitted using an air interface resource of the second cell.

In one embodiment, the second cell belongs to a target candidate cell set, the target candidate cell set including at least the second cell.

In one embodiment, the first cell is included in the target candidate cell set.

In one embodiment, data from MBS is transmitted via multicast in any target candidate cell in the target candidate cell set.

In one embodiment, data transmitted via multicast is scrambled by a multicast Radio Network Temporary Identifier (RNTI).

In one embodiment, the multicast RNTI is a Group-RNTI (G-RNTI).

In one embodiment, the multicast RNTI is a Group Configured Scheduling RNTI (G-CS-RNTI).

In one embodiment, the multicast RNTI is an MBS Control Channel-RNTI (MCCH-RNTI).

In one embodiment, the target candidate cell set is configured by the second node.

In one embodiment, the first message is used to configure the target candidate cell set.

In one embodiment, the target candidate cell set is configured via a system message.

In one embodiment, the target candidate cell set is configured via a System Information Block (SIB).

In one embodiment, the target candidate cell set is configured via a dedicated RRC signaling.

In one embodiment, the first node is in RRC_Connected state when being configured with the target candidate cell set, and the target candidate cell set is maintained when the first node enters RRC_Inactive state.

In one embodiment, the first node is in RRC_Idle state or RRC_Inactive state when being configured with the target candidate cell set.

In one embodiment, the first node is configured with CHO, the CHO configuration comprising configuration of the target candidate cell set and configuration of MRB being used to transmit the MBS in each target candidate cell in the target candidate cell set.

In one embodiment, the second message is used to indicate that RRC reconfiguration is completed.

In one embodiment, the second message is RRCReconfigurationComplete.

In one embodiment, the second message is transmitted in a random access procedure.

In one embodiment, the second message is included in a message 3 (Msg3) of a random access procedure; where the random access procedure is a 4-step random access procedure.

In one embodiment, the second message is included in a message A (MsgA) of a random access procedure; where the random access procedure is a 2-step random access procedure.

In one embodiment, the second message comprises a first identifier.

In one embodiment, the first transmitter transmits a sixth message, the sixth message comprising the first identifier.

In one embodiment, the second message and the sixth message belong to a same MAC PDU.

In one embodiment, the second message and the sixth message belong to different MAC PDUs.

In one embodiment, the first identifier is used to identify the first node in the second cell.

In one embodiment, the first identifier is used to identify the first node in the target candidate cell set.

In one embodiment, the first identifier is used to identify the MBS.

In one embodiment, the first identifier is used to identify the MBS in the second cell.

In one embodiment, the first identifier is a Cell-RNTI (C-RNTI).

In one embodiment, the first identifier is an MBS-RNTI.

In one embodiment, the first identifier is a G-RNTI.

In one embodiment, the sixth message is a MAC CE.

In one embodiment, a logical channel identity of the MAC CE is a positive integer between 35-44 including 35 and 44.

In one embodiment, a logical channel identity of the MAC CE is a positive integer between 64-313 including 64 and 313.

In one embodiment, the sixth message is an RRC signaling.

### Embodiment 9

Embodiment 9 illustrates a schematic diagram of a locational relationship between a first cell and a second cell according to one embodiment of the present application, as shown in FIG. 9.

In one embodiment, the second cell is a neighboring cell of the first cell.

In one subembodiment, a coverage area of the first cell and a coverage area of the second cell are at least partially non-overlapping.

In one embodiment, the phrase that the second cell is a neighboring cell of the first cell comprises that a coverage area of the first cell includes a coverage area of the second cell; herein, the second cell is a micro cell and the first cell is a macro cell.

In one embodiment, the phrase that the second cell is a neighboring cell of the first cell comprises that a coverage area of the second cell includes a coverage area of the first cell; herein, the first cell is a micro cell and the second cell is a macro cell.

It is to be noted that the macro cell and the micro cell in the above two embodiments are mainly used to distinguish the size of coverage area; where the coverage area of the macro cell includes the coverage area of the micro cell; that is, when the coverage area of the first cell includes the coverage area of the second cell, the first cell is a macro cell, and the second cell is a micro cell; conversely, when the coverage area of the second cell includes the coverage area of the first cell, the second cell is a macro cell and the first cell is a micro cell.

In case A of Embodiment 8, the first cell and the second cell are adjacent to each other and the coverage area of one cell does not fully include the coverage area of the other cell; in case B of Embodiment 8, the coverage area of the first cell includes the coverage area of the second cell; in case C of Embodiment 8, the coverage area of the second cell includes the coverage area of the first cell.

### Embodiment 10

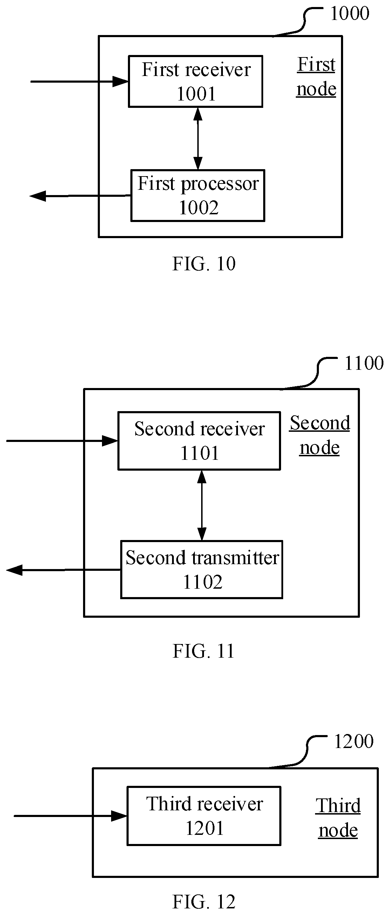

Embodiment 10 illustrates a structure block diagram of a processing device in a first node according to one embodiment of the present application, as shown in FIG. 10. In FIG. 10, a processing device in a first node 1000 is comprised of a first receiver 1001 and a first processor 1002; the first node 1000 is a UE.

In Embodiment 10, the first receiver 1001 receives a first message, the first message being used to indicate entering RRC_Inactive state; the first processor 1002 determines whether any condition in a first condition set is satisfied in RRC_Inactive state; and performs a first action as a response to that any condition in the first condition set is satisfied; herein, the first message indicates at least one radio bearer, and the first message is used to determine whether the first action is entering RRC_Idle state or transmitting a second message, the second message being an RRC signaling; the first condition set includes at least a first condition, and at least a channel quality of a first cell being worse than a specific threshold is used to determine whether the first condition is satisfied, the first cell being a serving cell of the first node.

In one embodiment, the at least one radio bearer is in active state.

In one embodiment, a channel quality of a second cell is used to determine whether the first condition is satisfied; herein, the second cell is a neighboring cell of the first cell.

In one embodiment, a channel quality of the second cell is used to determine whether the first condition is satisfied; herein, the second cell is a neighboring cell of the first cell; the second message is used to indicate that RRC reconfiguration is completed; herein, the second message is transmitted in the second cell, the second cell belonging to a target candidate cell set; data from MBS is transmitted via multicast in any target candidate cell in the target candidate cell set; and the first node maintains RRC_Inactive state after the second message is transmitted.

In one embodiment, the second message is used to request resumption of an RRC connection; herein, the second message is transmitted in the first cell.

In one embodiment, the first receiver 1001 receives a third message as a response to transmitting the second message, the third message being used to indicate entering RRC_Connected state.

In one embodiment, the first receiver 1001 receives a fourth message as a response to transmitting the second message, the fourth message being used to maintain RRC_Inactive state; herein, the second message is used to request Cell Handover; the fourth message is used to indicate Cell Handover.

In one embodiment, the at least one radio bearer includes a multicast MRB, the multicast MRB being used to transmit the data from the MBS.

In one embodiment, the first receiver 1001 comprises the receiver 454 (comprising the antenna 452), the receiving processor 456, the multi-antenna receiving processor 458 and the controller/processor 459 in FIG. 4 of the present application.

In one embodiment, the first receiver 1001 comprises at least one of the receiver 454 (comprising the antenna 452), the receiving processor 456, the multi-antenna receiving processor 458 or the controller/processor 459 in FIG. 4 of the present application.

In one embodiment, the first processor 1002 comprises the controller/processor 459 in FIG. 4 of the present application.

In one embodiment, the first processor 1002 comprises the transmitter 454 (comprising the antenna 452), the transmitting processor 468, the multi-antenna transmitting processor 457 and the controller/processor 459 in FIG. 4 of the present application.

In one embodiment, the first processor 1002 comprises at least one of the transmitter 454 (comprising the antenna 452), the transmitting processor 468, the multi-antenna transmitting processor 457 or the controller/processor 459 in FIG. 4 of the present application.

### Embodiment 11

Embodiment 11 illustrates a structure block diagram of a processing device in a second node according to one embodiment of the present application, as shown in FIG. 11. In FIG. 11, a processing device in a second node 1100 is comprised of a second receiver 1101 and a second transmitter 1102; the second node 1100 is a base station.

In Embodiment 11, the second transmitter 1102 transmits a first message, the first message being used to indicate entering RRC_Inactive state; herein, a receiver of the first message determines whether any condition in a first condition set is satisfied in RRC_Inactive state; and as a response to that any condition in the first condition set is satisfied, a first action is performed at the receiver of the first message; wherein the first message indicates at least one radio bearer, and the first message is used to determine whether the first action is entering RRC_Idle state or transmitting the second message, the second message being an RRC signaling; the first condition set includes at least a first condition, and at least a channel quality of a first cell being worse than a specific threshold is used to determine whether the first condition is satisfied, the first cell being a serving cell of the receiver of the first message.

In one embodiment, the at least one radio bearer is in active state.

In one embodiment, a channel quality of a second cell is used to determine whether the first condition is satisfied; herein, the second cell is a neighboring cell of the first cell.

In one embodiment, the second receiver 1101 receives the second message, the second message being used to request resumption of an RRC connection.

In one embodiment, the second message is transmitted in the first cell, the first cell being a cell maintained by the second node.

In one embodiment, the second transmitter 1102 transmits a third message as a response to receiving the second message, the third message being used to indicate entering RRC_Connected state.

In one embodiment, the second transmitter 1102 transmits a fourth message as a response to receiving the second message, the fourth message being used to maintain RRC_Inactive state; herein, the second message is used to request Cell Handover; the fourth message is used to indicate Cell Handover.

In one embodiment, the at least one radio bearer includes a multicast MRB, the multicast MRB being used to transmit the data from the MBS.

In one embodiment, the second receiver 1101 comprises the receiver 418 (comprising the antenna 420), the receiving processor 470, the multi-antenna receiving processor 472 and the controller/processor 475 in FIG. 4 of the present application.

In one embodiment, the second receiver 1101 comprises at least one of the receiver 418 (comprising the antenna 420), the receiving processor 470, the multi-antenna receiving processor 472 or the controller/processor 475 in FIG. 4 of the present application.

In one embodiment, the second transmitter 1102 comprises the transmitter 418 (comprising the antenna 420), the transmitting processor 416, the multi-antenna transmitting processor 471 and the controller/processor 475 in FIG. 4 of the present application.

In one embodiment, the second transmitter 1102 comprises at least one of the transmitter 418 (comprising the antenna 420), the transmitting processor 416, the multi-antenna transmitting processor 471 or the controller/processor 475 in FIG. 4 of the present application.

### Embodiment 12

Embodiment 12 illustrates a structure block diagram of a processing device in a third node according to one embodiment of the present application, as shown in FIG. 12. In FIG. 12, a processing device in a third node 1200 is comprised of a third receiver 1201; the third node 1200 is a base station.

In Embodiment 12, the third receiver 1201 receives a second message, the second message being used to indicate that RRC reconfiguration is completed; herein, the second message is transmitted in the second cell, the second cell belonging to a target candidate cell set; data from MBS is transmitted via multicast in any target candidate cell in the target candidate cell set.

In one embodiment, the second cell is a cell maintained by the third node.

In one embodiment, a first message is transmitted, the first message being used to indicate entering RRC_Inactive state; a receiver of the first message determines whether any condition in a first condition set is satisfied in RRC_Inactive state; and as a response to that any condition in the first condition set is satisfied, a first action is performed at the receiver of the first message; wherein the first message indicates at least one radio bearer, and the first message is used to determine whether the first action is entering RRC_Idle state or transmitting the second message, the second message being an RRC signaling; the first condition set includes at least a first condition, and at least a channel quality of a first cell being worse than a specific threshold is used to determine whether the first condition is satisfied, the first cell being a serving cell of the receiver of the first message.

In one embodiment, the at least one radio bearer is in active state.

In one embodiment, a channel quality of the second cell is used to determine whether the first condition is satisfied; herein, the second cell is a neighboring cell of the first cell.

In one embodiment, the receiver of the first message maintains RRC_Inactive state after the second message has been transmitted.

In one embodiment, the at least one radio bearer includes a multicast MRB, the multicast MRB being used to transmit the data from the MBS.

In one embodiment, the third receiver 1201 comprises the receiver 418 (comprising the antenna 420), the receiving processor 470, the multi-antenna receiving processor 472 and the controller/processor 475 in FIG. 4 of the present application.

In one embodiment, the third receiver 1201 comprises at least one of the receiver 418 (comprising the antenna 420), the receiving processor 470, the multi-antenna receiving processor 472 or the controller/processor 475 in FIG. 4 of the present application.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first-type communication node or UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The second-type communication node or base station or network-side device in the present application includes but is not limited to macro-cellular base stations, micro-cellular base stations, home base stations, relay base station, eNB, gNB, Transmitter Receiver Point (TRP), relay satellite, satellite base station, airborne base station, test equipment like transceiving device simulating partial functions of base station or signaling tester and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous description.

## Claims

1. A user equipment, UE, (1000) for wireless communication, comprising:
a receiver (1001) configured to receive a first radio resource control, RRC, message that indicates at least one radio bearer and that indicates entry into an RRC_Inactive state; and
a processor (1002) configured to:
determine, in the RRC_Inactive state, whether a condition of a first condition set is satisfied, and
on a condition that the condition of the first condition set is satisfied, cause the UE to enter into an RRC_Idle state or transmit a second RRC message, based on the first RRC message,
**characterized in that** the first condition set includes at least a first condition that is satisfied in response to at least a channel quality of a serving cell of the UE being less than a first threshold.

2. The UE according to claim 1, wherein the at least one radio bearer is in an active state.

3. The UE according to claim 1 or 2, wherein the first condition is satisfied on a condition that the channel quality of the serving cell is less than the first threshold and the channel quality of a second cell is greater than a second threshold;
wherein the second cell is a neighboring cell of the serving cell.

4. The UE according to any of claims 1-3, wherein a type of the at least one radio bearer indicated by the first RRC message indicates whether the first action is entry into the RRC_Idle state or transmitting the second RRC message;
wherein the type of the at least one radio bearer is Data Radio Bearer, DRB, multicast Media Resource Broker, MRB, or Signaling Radio Bearer, SRB.

5. The UE according to any of claims 1-4, wherein on a condition that the at least one radio bearer indicated by the first RRC message is not a multicast MRB, the processor causes the UE (1000) to enter into the RRC_Idle state from the RRC_Inactive state.

6. The UE according to any of claims 1-5, wherein on a condition that the at least one radio bearer indicated by the first RRC message includes a multicast MRB, the processor causes the UE to transmit the second RRC message.

7. The UE according to any of claims 1-6, wherein the second RRC message is a request for a resumption of an RRC connection.

8. The UE according to any of claims 1-7, wherein the receiver is configured to receive a third message in response to transmitting the second RRC message, the third message being used to indicate entering RRC_Connected state.

9. The UE according to any of claims 1-8, wherein the channel quality of the serving cell is a measured Reference Signal Received Power, RSRP, or a Reference Signal Received Quality, RSRQ, for the serving cell.

10. A wireless communication system, comprising:
a base station (1100) including:
a transmitter (1102) configured to transmit a first radio resource control, RRC, message that indicates at least one radio bearer and that indicates entry into an RRC_Inactive state; and
a user equipment, UE, (1000) including:
a receiver (1001) configured to receive the first RRC; and
a processor (1002) configured to:
determine, in the RRC_Inactive state, whether a condition of a first condition set is satisfied, and
on a condition that the condition of the first condition set is satisfied, cause the UE (1000) to enter into an RRC_Idle state or transmit a second RRC message, based on the first RRC message,
**characterized in that** the first condition set includes at least a first condition that is satisfied in response to at least a channel quality of a serving cell of the UE (1000) being less than a first threshold.

11. The system according to claim 10, wherein the at least one radio bearer is in an active state.

12. A method for wireless communication, comprising:
receiving, by a user equipment, UE, (1000), a first radio resource control, RRC, message that indicates at least one radio bearer and that indicates entry into an RRC_Inactive state;
determining, in the RRC_Inactive state, whether a condition of a first condition set is satisfied; and
on a condition that the condition of the first condition set is satisfied, entering into an RRC_Idle state or transmitting a second RRC message, based on the first RRC message,
**characterized in that** the first condition set includes at least a first condition that is satisfied in response to at least a channel quality of a serving cell of the UE (1000) being less than a first threshold.

13. The method according to claim 12, wherein the at least one radio bearer is in an active state.

14. A method for wireless communication, comprising:
transmitting, by a base station (1100), a first radio resource control, RRC, message that indicates at least one radio bearer and that indicates entry into an RRC_Inactive state;
receiving, by a user equipment, UE, (1000), the first RRC message;
determining, by the UE (1000) in the RRC_Inactive state, whether a condition of a first condition set is satisfied; and
on a condition that the condition of the first condition set is satisfied, entering, by the UE (1000), into an RRC_Idle state or transmitting a second RRC message,
**characterized in that** the first condition set includes at least a first condition that is satisfied in response to at least a channel quality of a serving cell of the UE (1000) being less than a first threshold.

15. The method according to claim 14, wherein the at least one radio bearer is in an active state.

## Patentansprüche

1. Benutzervorrichtung, UE, (1000) zur drahtlosen Kommunikation, umfassend:
einen Empfänger (1001), der eingerichtet ist, eine erste Funkressourcensteuerungs-, RRC-, Nachricht zu empfangen, die mindestens einen Funkträger angibt und den Eintritt in einen RRC_Inactive-Zustand angibt; und
einen Prozessor (1002), der eingerichtet ist, um:
in dem RRC_Inactive-Zustand zu bestimmen, ob eine Bedingung eines ersten Bedingungssatzes erfüllt ist, und
unter der Bedingung, dass die Bedingung des ersten Bedingungssatzes erfüllt ist, die UE dazu zu veranlassen, in einen RRC_Idle-Zustand einzutreten oder eine zweite RRC-Nachricht zu übertragen, auf der Grundlage der ersten RRC-Nachricht, **dadurch gekennzeichnet, dass** der erste Bedingungssatz zumindest eine erste Bedingung umfasst, die in Antwort darauf erfüllt ist, dass zumindest eine Kanalqualität einer bedienenden Zelle der UE kleiner als ein erster Schwellenwert ist.

2. UE nach Anspruch 1, wobei sich der mindestens eine Funkträger in einem aktiven Zustand befindet.

3. UE nach Anspruch 1 oder 2, wobei die erste Bedingung unter der Bedingung erfüllt ist, dass die Kanalqualität der bedienenden Zelle kleiner als der erste Schwellenwert ist und die Kanalqualität einer zweiten Zelle größer als ein zweiter Schwellenwert ist;
wobei die zweite Zelle eine Nachbarzelle der bedienenden Zelle ist.

4. UE nach einem der Ansprüche 1 bis 3, wobei ein Typ des mindestens einen durch die erste RRC-Nachricht angegebenen Funkträgers angibt, ob die erste Aktion der Eintritt in den RRC_Idle-Zustand oder das Übertragen der zweiten RRC-Nachricht ist;
wobei der Typ des mindestens einen Funkträgers ein Data Radio Bearer, DRB, ein Multicast Media Resource Broker, MRB, oder ein Signaling Radio Bearer, SRB, ist.

5. UE nach einem der Ansprüche 1 bis 4, wobei der Prozessor unter der Bedingung, dass der mindestens eine durch die erste RRC-Nachricht angegebene Funkträger kein Multicast-MRB ist, die UE (1000) dazu veranlasst, aus dem RRC_Inactive-Zustand in den RRC_Idle-Zustand einzutreten.

6. UE nach einem der Ansprüche 1 bis 5, wobei der Prozessor unter der Bedingung, dass der mindestens eine durch die erste RRC-Nachricht angegebene Funkträger einen Multicast-MRB umfasst, die UE dazu veranlasst, die zweite RRC-Nachricht zu übertragen.

7. UE nach einem der Ansprüche 1 bis 6, wobei die zweite RRC-Nachricht eine Anforderung zum Wiederaufnehmen einer RRC-Verbindung ist.

8. UE nach einem der Ansprüche 1 bis 7, wobei der Empfänger eingerichtet ist, in Antwort auf das Übertragen der zweiten RRC-Nachricht eine dritte Nachricht zu empfangen, wobei die dritte Nachricht verwendet wird, um den Eintritt in einen RRC_Connected-Zustand anzugeben.

9. UE nach einem der Ansprüche 1 bis 8, wobei die Kanalqualität der bedienenden Zelle eine gemessene Reference Signal Received Power, RSRP, oder eine Reference Signal Received Quality, RSRQ, für die bedienende Zelle ist.

10. Drahtloses Kommunikationssystem, umfassend:
eine Basisstation (1100), die umfasst:
einen Sender (1102), der eingerichtet ist, eine erste Funkressourcensteuerungs-, RRC-, Nachricht zu übertragen, die mindestens einen Funkträger angibt und den Eintritt in einen RRC_Inactive-Zustand angibt; und
eine Benutzervorrichtung, UE, (1000), die umfasst:
einen Empfänger (1001), der eingerichtet ist, die erste RRC-Nachricht zu empfangen; und
einen Prozessor (1002), der eingerichtet ist, um:
in dem RRC_Inactive-Zustand zu bestimmen, ob eine Bedingung eines ersten Bedingungssatzes erfüllt ist, und
unter der Bedingung, dass die Bedingung des ersten Bedingungssatzes erfüllt ist, die UE (1000) dazu zu veranlassen, in einen RRC_Idle-Zustand einzutreten oder eine zweite RRC-Nachricht zu übertragen, auf der Grundlage der ersten RRC-Nachricht, **dadurch gekennzeichnet, dass** der erste Bedingungssatz zumindest eine erste Bedingung umfasst, die in Antwort darauf erfüllt ist, dass zumindest eine Kanalqualität einer bedienenden Zelle des UE (1000) kleiner als ein erster Schwellenwert ist.

11. System nach Anspruch 10, wobei sich der mindestens eine Funkträger in einem aktiven Zustand befindet.

12. Verfahren zur drahtlosen Kommunikation, umfassend:
Empfangen, durch eine Benutzervorrichtung, UE, (1000), einer ersten Funkressourcensteuerungs-, RRC-, Nachricht, die mindestens einen Funkträger angibt und den Eintritt in einen RRC_Inactive-Zustand angibt;
Bestimmen, in dem RRC_Inactive-Zustand, ob eine Bedingung eines ersten Bedingungssatzes erfüllt ist; und
unter der Bedingung, dass die Bedingung des ersten Bedingungssatzes erfüllt ist, Eintreten in einen RRC_Idle-Zustand oder Übertragen einer zweiten RRC-Nachricht, auf der Grundlage der ersten RRC-Nachricht, **dadurch gekennzeichnet, dass** der erste Bedingungssatz zumindest eine erste Bedingung umfasst, die in Antwort darauf erfüllt ist, dass zumindest eine Kanalqualität einer bedienenden Zelle der UE (1000) kleiner als ein erster Schwellenwert ist.

13. Verfahren nach Anspruch 12, wobei sich der mindestens eine Funkträger in einem aktiven Zustand befindet.

14. Verfahren zur drahtlosen Kommunikation, umfassend:
Übertragen, durch eine Basisstation (1100), einer ersten Funkressourcensteuerungs-, RRC-, Nachricht, die mindestens einen Funkträger angibt und den Eintritt in einen RRC_Inactive-Zustand angibt;
Empfangen, durch eine Benutzervorrichtung, UE, (1000), der ersten RRC-Nachricht;
Bestimmen, durch die UE (1000) in dem RRC_Inactive-Zustand, ob eine Bedingung eines ersten Bedingungssatzes erfüllt ist; und
unter der Bedingung, dass die Bedingung des ersten Bedingungssatzes erfüllt ist, Eintreten, durch die UE (1000), in einen RRC_Idle-Zustand oder Übertragen einer zweiten RRC-Nachricht, **dadurch gekennzeichnet, dass** der erste Bedingungssatz zumindest eine erste Bedingung umfasst, die in Antwort darauf erfüllt ist, dass zumindest eine Kanalqualität einer bedienenden Zelle der UE (1000) kleiner als ein erster Schwellenwert ist.

15. Verfahren nach Anspruch 14, wobei sich der mindestens eine Funkträger in einem aktiven Zustand befindet.

## Revendications

1. Équipement utilisateur, UE, (1000) pour une communication sans fil, comprenant :
un récepteur (1001) configuré pour recevoir un premier message de contrôle de ressources radio, RRC, qui indique au moins un support radio et qui indique l'entrée dans un état RRC_Inactif ; et
un processeur (1002) configuré pour :
déterminer, dans l'état RRC_Inactif, si une condition d'un premier ensemble de conditions est satisfaite, et
à condition que la condition du premier ensemble de conditions soit satisfaite, amener l'UE à entrer dans un état RRC_Veille ou transmettre un deuxième message RRC, sur la base du premier message RRC, **caractérisé en ce que** le premier ensemble de conditions inclut au moins une première condition qui est satisfaite lorsqu'au moins la qualité de canal d'une cellule de desserte de l'UE est inférieure à un premier seuil.

2. UE selon la revendication 1, dans lequel l'au moins un support radio est dans un état actif.

3. UE selon la revendication 1 ou 2, dans lequel la première condition est satisfaite à condition que la qualité de canal de la cellule de desserte soit inférieure au premier seuil et que la qualité de canal d'une seconde cellule soit supérieure à un second seuil ;
dans lequel la seconde cellule est une cellule voisine de la cellule de desserte.

4. UE selon l'une quelconque des revendications 1 à 3, dans lequel un type de l'au moins un support radio indiqué par le premier message RRC indique si la première action est l'entrée dans l'état RRC_Veille ou la transmission du deuxième message RRC ;
dans lequel le type de l'au moins un support radio est un support radio de données, DRB, un courtier de ressources multimédias multidiffusion, MRB, ou une porteuse radio de signalisation, SRB.

5. UE selon l'une quelconque des revendications 1 à 4, dans lequel, à condition que l'au moins un support radio indiqué par le premier message RRC ne soit pas un MRB multidiffusion, le processeur amène l'UE (1000) à entrer dans l'état RRC_Inactif à partir de l'état RRC_Inactif.

6. UE selon l'une quelconque des revendications 1 à 5, dans lequel, à condition que l'au moins un support radio indiqué par le premier message RRC comprenne un MRB multidiffusion, le processeur amène l'UE à transmettre le deuxième message RRC.

7. UE selon l'une quelconque des revendications 1 à 6, dans lequel le deuxième message RRC est une demande de reprise d'une connexion RRC.

8. UE selon l'une quelconque des revendications 1 à 7, dans lequel le récepteur est configuré pour recevoir un troisième message en réponse à la transmission du deuxième message RRC, le troisième message étant utilisé pour indiquer l'entrée dans l'état RRC_Connecté.

9. UE selon l'une quelconque des revendications 1 à 8, dans lequel la qualité de canal de la cellule de desserte est une puissance reçue du signal de référence, RSRP, mesurée ou une qualité reçue du signal de référence, RSRQ, pour la cellule de desserte.

10. Système de communication sans fil, comprenant :
une station de base (1100) comprenant :
un émetteur (1102) configuré pour transmettre un premier message de contrôle de ressources radio, RRC, qui indique au moins un support radio et qui indique l'entrée dans un état RRC_Inactif ; et
un équipement utilisateur, UE, (1000) comprenant :
un récepteur (1001) configuré pour recevoir le premier RRC ; et
un processeur (1002) configuré pour :
déterminer, dans l'état RRC_Inactif, si une condition d'un premier ensemble de conditions est satisfaite, et
à condition que la condition du premier ensemble de conditions soit satisfaite, amener l'UE (1000) à entrer dans un état RRC_Veille ou transmettre un deuxième message RRC, sur la base du premier message RRC, **caractérisé en ce que** le premier ensemble de conditions inclut au moins une première condition qui est satisfaite lorsqu'au moins une qualité de canal d'une cellule de desserte de l'UE (1000) est inférieure à un premier seuil.

11. Système selon la revendication 10, dans lequel l'au moins un support radio est dans un état actif.

12. Procédé pour une communication sans fil, comprenant :
la réception, par un équipement utilisateur, UE, (1000), d'un premier message de contrôle de ressources radio, RRC, qui indique au moins un support radio et qui indique l'entrée dans un état RRC_Inactif ;
la détermination, dans l'état RRC_Inactif, si une condition d'un premier ensemble de conditions est satisfaite ; et
à condition que la condition du premier ensemble de conditions soit satisfaite, l'entrée dans un état RRC_Veille ou la transmission d'un deuxième message RRC, sur la base du premier message RRC, **caractérisé en ce que** le premier ensemble de conditions inclut au moins une première condition qui est satisfaite lorsqu'au moins une qualité de canal d'une cellule de desserte de l'UE (1000) est inférieure à un premier seuil.

13. Procédé selon la revendication 12, dans lequel l'au moins un support radio est dans un état actif.

14. Procédé pour une communication sans fil, comprenant :
la transmission, par une station de base (1100), d'un premier message de contrôle de ressources radio, RRC, qui indique au moins un support radio et qui indique l'entrée dans un état RRC_Inactif ;
la réception, par un équipement utilisateur, UE, (1000), du premier message RRC ;
la détermination, par l'UE (1000) dans l'état RRC_Inactif, si une condition d'un premier ensemble de conditions est satisfaite ; et
à condition que la condition du premier ensemble de conditions soit satisfaite, l'entrée, par l'UE (1000), dans un état RRC_Veille ou la transmission d'un deuxième message RRC, **caractérisé en ce que** le premier ensemble de conditions inclut au moins une première condition qui est satisfaite lorsqu'au moins une qualité de canal d'une cellule de desserte de l'UE (1000) est inférieure à un premier seuil.

15. Procédé selon la revendication 14, dans lequel l'au moins un support radio est dans un état actif.
